(19) Europäisches Patentamt
European Patent Office
Office européen des brevets

(11) **EP 4 365 129 A1**

(12) **EUROPEAN PATENT APPLICATION**
published in accordance with Art. 153(4) EPC

(43) Date of publication:
**08.05.2024 Bulletin 2024/19**

(21) Application number: **22832831.6**

(22) Date of filing: **16.06.2022**

(51) International Patent Classification (IPC):
**C01B 3/30** (2006.01)        **C01B 32/18** (2017.01)
**B01J 29/48** (2006.01)

(52) Cooperative Patent Classification (CPC):
**B01J 29/48; C01B 3/30; C01B 32/18; Y02E 60/36**

(86) International application number:
**PCT/JP2022/024048**

(87) International publication number:
**WO 2023/276677 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2021   JP 2021108088**

(60) Divisional application:
**24159694.9**

(71) Applicants:
• **National Institute of Technology
Hachioji-shi, Tokyo 1930834 (JP)**

• **Sumitomo Chemical Company Limited
Tokyo 103-6020 (JP)**

(72) Inventors:
• **MIYAKOSHI, Akihiko
Asahikawa-shi, Hokkaido 071-8142 (JP)**
• **KODERA, Fumihiro
Asahikawa-shi, Hokkaido 071-8142 (JP)**
• **KOSAKA, Masaki
Ichihara-shi, Chiba 299-0195 (JP)**
• **UOE, Kousuke
Niihama-shi, Ehime 792-8521 (JP)**

(74) Representative: **Vossius & Partner
Patentanwälte Rechtsanwälte mbB
Siebertstrasse 3
81675 München (DE)**

(54) **HYDROGEN PRODUCING DEVICE AND HYDROGEN PRODUCING METHOD**

(57)    The object of an aspect of the present invention is to provide an environmentally friendly and economically excellent hydrogen production device. Furthermore, the object of an aspect of the present invention is to provide an industrially useful carbon aggregate. A hydrogen production device in accordance with an aspect of the present invention includes: a reactor that includes a filler containing a catalyst for pyrolysis of a hydrocarbon; a gas supply section that supplies, into the reactor, gas containing a hydrocarbon compound; and a microwave irradiation section that irradiates the catalyst with a microwave. The gas supply section supplies the gas at a flow rate at which the filler is fluidized, and hydrogen is generated by the hydrocarbon compound being pyrolyzed in the presence of the catalyst activated by the microwave. A carbon aggregate production device in accordance with an aspect of the present invention includes: a reactor that includes a filler containing a catalyst for pyrolysis of a hydrocarbon; a gas supply section that supplies, to the reactor, gas containing a hydrocarbon compound; and a microwave irradiation section that irradiates the catalyst with a microwave. The gas supply section supplies the gas at a flow rate at which the filler is fluidized, and a carbon aggregate is generated by the hydrocarbon compound being pyrolyzed in the presence of the catalyst activated by the microwave.

FIG. 1

EP 4 365 129 A1

**Description**

Technical Field

The present invention relates to a hydrogen production device and a hydrogen production method. The present invention further relates to a carbon aggregate production device and a carbon aggregate production method each of which has a similar configuration.

Background Art

Conventionally, hydrogen is produced by thermochemical decomposition, electrolysis, or the like of a petroleum resource, and is mainly produced by a steam reforming reaction. However, this method requires a large amount of steam, resulting in loss of much energy. Moreover, carbon dioxide ($CO_2$) or carbon monoxide (CO) is generated as a by-product in the process of producing hydrogen. Therefore, this method is problematic from the viewpoint of reducing an environmental load.

Under the circumstances, $CO_2$ free hydrogen production techniques are desired as a hydrogen production method which allows a reduction in environmental load. At present, the $CO_2$ free hydrogen production techniques are roughly classified into the following three techniques (i) to (iii): (i) fossil fuel reforming + carbon dioxide capture and storage (CCS); (ii) a water electrolysis process; and (iii) pyrolysis of a hydrocarbon.

The present invention relates to the technique (iii). The technique (iii) is a technique of using a hydrocarbon, such as methane, as a raw material and directly decomposing the hydrocarbon into hydrogen and solid carbon with use of a specific catalyst.

Patent Literatures 1 and 2 each disclose an example of the technique (iii). Patent Literatures 1 and 2 each disclose a hydrogen production device which produces hydrogen by causing proceeding of pyrolysis of a hydrogen-containing compound (for example, methane) in the presence of a catalyst activated by irradiation with a microwave.

The technique (iii) can be interpreted as a technique of obtaining solid carbon by decomposing a hydrocarbon. Patent Literature 3 discloses a graphene production device which obtains graphene by causing, in the presence of a catalyst activated by irradiation with a microwave, proceeding of a reaction in which a carbon compound (for example, methane) is used as a substrate.

Citation List

[Patent Literature]

[Patent Literature 1]
Japanese Patent Application Publication Tokukai No. 2015-20929
[Patent Literature 2]
Japanese Patent Application Publication Tokukai No. 2015-44702
[Patent Literature 3]
Japanese Patent Application Publication Tokukai No. 2015-221733

Summary of Invention

Technical Problem

In the conventional technique disclosed in each of Patent Literatures 1 and 2, a fixed-bed type reaction process is employed. In these techniques, solid carbon is deposited on a surface of a catalyst with a reaction, and the catalyst is deactivated in a short time. Therefore, there is a problem that production efficiency for the amount of the catalyst is poor and continuous operation is difficult.

Graphene obtained by the technique disclosed in Patent Literature 3 is generated around a nickel particle. The diameter of a particle containing the nickel particle is approximately 200 nm. In a case where applying, to use in an electrode or the like, a carbon material obtained by pyrolysis of a carbon compound such as methane is considered, it is possible that the carbon material is extremely industrially useful when the carbon material having a greater particle diameter (for example, micrometer order) is obtained.

The object of an aspect of the present invention is to provide an environmentally friendly and economically excellent hydrogen production device. Furthermore, the object of an aspect of the present invention is to provide an industrially useful carbon aggregate.

Solution to Problem

In order to attain the above object, a hydrogen production device in accordance with an aspect of the present invention includes: a reactor that includes a filler containing a catalyst for pyrolysis of a hydrocarbon; a gas supply section that supplies, into the reactor, gas containing a hydrocarbon compound; and a microwave irradiation section that irradiates the catalyst with a microwave. The gas supply section supplies the gas at a flow rate at which the filler is fluidized, and hydrogen is generated by the hydrocarbon compound being pyrolyzed in the presence of the catalyst activated by the microwave.

A hydrogen production method in accordance with an aspect of the present invention includes producing hydrogen with use of the above hydrogen production device.

A carbon aggregate production device in accordance with an aspect of the present invention includes: a reactor that includes a filler containing a catalyst for pyrolysis of a hydrocarbon; a gas supply section that supplies, to the reactor, gas containing a hydrocarbon compound; and a microwave irradiation section that irradiates the catalyst with a microwave. The gas supply section supplies the gas at a flow rate at which the filler is fluidized, and a carbon aggregate is generated by the hydrocarbon compound being pyrolyzed in the presence of the catalyst activated by the microwave.

A carbon aggregate production method in accordance with an aspect of the present invention includes producing a carbon aggregate with use of the above carbon aggregate production device.

Advantageous Effects of Invention

According to an aspect of the present invention, it is possible to provide an environmentally friendly and economically excellent hydrogen production device. Furthermore, according to the present invention, it is possible to provide an industrially useful carbon aggregate.

Brief Description of Drawings

Fig. 1 is a drawing schematically illustrating a configuration of a hydrogen production device in accordance with an embodiment of the present invention.
Fig. 2 is a flowchart illustrating an example of a hydrogen production method in accordance with the present embodiment.
Fig. 3 is a drawing schematically illustrating a main part of a hydrogen production device used in a test in an example.
Fig. 4 is an enlarged view illustrating a reactor of the hydrogen production device used in the test in the example and is a drawing schematically illustrating also peripheral equipment.
Fig. 5 is a drawing schematically illustrating a main part of a hydrogen production device used in a test in a comparative example.
Fig. 6 is an image of carbon aggregates obtained in the example, the image being captured by a scanning electron microscope.
Fig. 7 is an image of solid carbon obtained in the comparative example, the image being captured by a scanning electron microscope.

Description of Embodiments

An exemplary embodiment of a hydrogen production device in accordance with the present invention is described below in detail. Embodiments of the present invention are not limited to a detailed example described below.

[Embodiment]

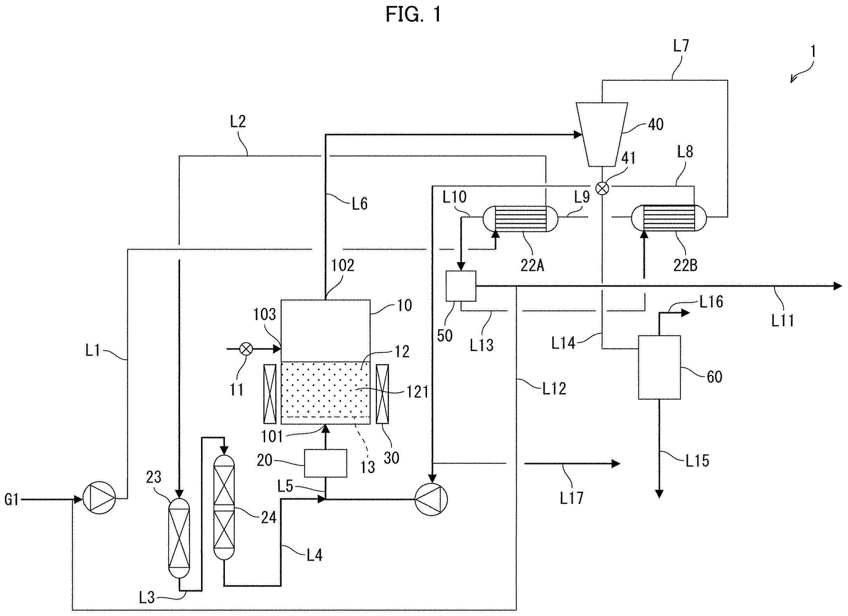

Fig. 1 is a drawing schematically illustrating a configuration of a hydrogen production device 1 in accordance with an exemplary embodiment of the present invention. As illustrated in Fig. 1, the hydrogen production device 1 includes a reactor 10, a gas supply device 20 (gas supply section), a microwave irradiation device 30 (microwave irradiation section), and a cyclone 40 (separation section). The hydrogen production device 1 may further include heat exchangers 22A and 22B, a hydrogenation reactor 23, a desulfurization reactor 24, a pressure swing adsorption (PSA) purifier 50 (purifier of a pressure swing adsorption type), and a cooling device 60. The hydrogen production device 1 is schematically configured to include the above constituent elements, paths L1 through L17, etc.

The hydrogen production device 1 in accordance with an embodiment of the present invention is a device in which hydrogen is generated by a hydrocarbon compound being pyrolyzed in the presence of a catalyst 121 activated by a microwave and a carbon aggregate is obtained as a by-product of generation of the hydrogen. Note that the configuration of the hydrogen production device 1 may be used as a carbon aggregate production device in which a main product is a carbon aggregate and a by-product is hydrogen. A hydrogen production method in accordance with an embodiment of the present invention in which method the hydrogen production device 1 is used can be similarly interpreted as a carbon aggregate production method.

In an embodiment of the present invention, the hydrocarbon compound is used as a raw material. The hydrocarbon compound in an embodiment of the present invention can be methane, ethane, butane, hexane, ethylene, propylene, acetylene, or the like, and is preferably methane.

The catalyst 121 that can be used in an embodiment of the present invention is a catalyst for pyrolysis of a hydrocarbon. The catalyst 121 is not limited to any particular one, provided that the catalyst 121 can decompose a hydrocarbon. The catalyst 121 can be, for example, nickel (Ni), molybdenum carbide (Mo2C), zeolite (examples thereof include synthetic zeolite such as HZSM-5 zeolite, mordenite, ferrierite, beta zeolite, and Y zeolite, and HZSM-5 zeolite is preferable), iron (Fe), cobalt (Co), or the like. Further, one or more of these catalysts may be mixed and used as the catalyst 121. The one or more of the catalysts which one or more are to be contained in the catalyst 121 can be selected as desired, but preferably include HZSM-5 zeolite. By the catalyst 121 containing HZSM-5 zeolite, it is possible to improve the selectivity of the hydrogen to be generated.

A filler 12 that is introduced into the reactor 10 may contain a susceptor component in addition to the catalyst 121. The susceptor component is a substance that can be heated by absorbing the microwave and generating heat by itself. The susceptor component can be, for example, silicon carbide (SiC), carbon (C), or the like. By the filler 12 containing the susceptor component, it is possible to further improve an effect of heating the catalyst 121 by irradiation with the microwave. Note that a mixing ratio between the catalyst 121 and the susceptor component in the filler 12 can be set as desired, and may be, for example, 70:30 by a weight ratio.

The reactor 10 is a fluidized-bed reactor that includes the filler 12 containing the catalyst 121. A gas introduction part 101 from which gas (referred to as gas G1) containing the hydrocarbon compound is introduced is provided to a bottom part of the reactor 10. A discharge part 102 that is for discharging a solid-gas mixture containing a hydrogen gas ($H_2$) which has been generated, the hydrocarbon compound which is unreacted, and solid carbon which has been generated by pyrolysis of the hydrocarbon compound is provided to an upper part of the reactor 10. The solid carbon obtained in an embodiment of the present invention includes the carbon aggregate. Furthermore, a catalyst introduction part 103 from which the catalyst 121 is introduced so as to replenish the catalyst 121 that has been decreased by being contained in the solid-gas mixture is provided to the reactor 10. A filter 13 that is for supporting the filler 12 and reducing a possibility that the filler 12 blocks the gas introduction part 101 is provided in the interior of the reactor 10. The filter 13 is not limited to any particular one, and can be, for example, a quartz glass filter or the like.

The shape, size, etc. of the reactor 10 are not limited any particular ones, provided that it is possible to irradiate, with the microwave, the catalyst 121 in the interior of the reactor 10 and it is possible to cause, in the interior of the reactor 10, proceeding of pyrolysis of the hydrogen compound in the presence of the catalyst 121.

The reactor 10 may further include a reflection thermometer (not illustrated). It is possible to measure, with use of the reflection thermometer, a temperature (surface temperature) of the catalyst 121 heated by irradiation with the microwave. The reflection thermometer can be a publicly known reflection thermometer. The output of the microwave may be controlled based on the surface temperature measured by the reflection thermometer.

The microwave irradiation device 30 is a device that irradiates, with the microwave, the catalyst 121 in the interior of the reactor 10. The microwave irradiation device 30 may employ any one of a single mode and a multimode.

The gas supply device 20 is a device for supplying, to the reactor 10, the gas (gas G1) containing the hydrocarbon compound. The gas supply device 20 includes, for example, a flowmeter and a control device, and is capable of supplying the gas G1 into the reactor 10 via the gas introduction part 101 at a flow rate at which the filler in the reactor 10 is fluidized.

The heat exchangers 22A and 22B are each a multitube heat exchanger. The heat exchangers 22A and 22B can be disposed primarily for the respective purposes of preheating gas that is to be supplied to the reactor 10 and cooling gas that has been discharged from the reactor 10. The heat exchangers 22A and 22B can be each a publicly known heat exchanger.

The hydrogenation reactor 23 and the desulfurization reactor 24 are devices for hydrodesulfurizing the gas G1 to be supplied to the reactor 10. The hydrogenation reactor 23 and the desulfurization reactor 24 can be each a device generally used in a conventional hydrogen production plant or the like.

The cyclone 40 is a device for separating, into a solid component and a gas component, the solid-gas mixture that has been discharged from the discharge part 102 of the reactor 10 and that contains $H_2$, the hydrocarbon compound which is unreacted, and/or the solid carbon. The cyclone 40 can be disposed downstream of the reactor 10.

The PSA purifier 50 is a device for separating $H_2$ from gas that has been discharged from the reactor 10 and that contains $H_2$ and the hydrocarbon compound which is unreacted. The PSA purifier 50 can be a generally used and publicly known device.

The cooling device 60 is a device for cooling the solid component that has been separated by the cyclone 40 and that contains the carbon aggregate.

The hydrogen production device 1 in accordance with an embodiment of the present invention is an environmentally friendly $CO_2$ free technique. Furthermore, the hydrogen production device 1 having the above configuration enables continuous operation. Moreover, it is possible to obtain an industrially useful carbon aggregate together with $H_2$. Since the carbon aggregate can be used in electrodes and the like, the hydrogen production device 1 is economically excellent without causing waste of carbon resources.

(Hydrogen production method)

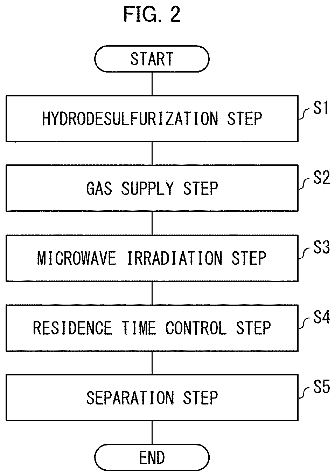

Fig. 2 is a flowchart illustrating an example of a hydrogen production method in accordance with the present embodiment. The hydrogen production method in accordance with the present embodiment is carried out according to, for example, the flowchart illustrated in Fig. 2. Note that the flowchart illustrated in Fig. 2 is an example and the hydrogen production method is not limited to this example. Each step in the hydrogen production method in accordance with the present embodiment is described below in detail.

(Hydrodesulfurization step S1)

A hydrodesulfurization step S1 is a step of reducing an impurity component that is contained in the gas G1 supplied as a raw material and that includes sulfur. Incorporation of a sulfur component in the gas G1 adversely affects the catalyst. Therefore, the sulfur component in the gas G1 is reduced by the hydrogenation reactor 23 and the desulfurization reactor 24. The gas G1 may be preheated by the heat exchanger 22A before the hydrogenation reactor 23. The hydrodesulfurization step S1 for the gas G1 supplied as a raw material is indicated by the path L1 - the heat exchanger 22A - the path L2 - the hydrogenation reactor 23 - the path L3 - the desulfurization reactor 24 - the route L4 in Fig. 1. The hydrodesulfurization step S1 is not an essential step. However, by including the hydrodesulfurization step S1, it is possible to extend the lifetime of the catalyst.

(Gas supply step S2)

A gas supply step S2 is a step of supplying the gas G1 to the reactor 10. In the gas supply step, the gas supply device 20 supplies the gas G1 at the flow rate at which the filler 12 in the reactor 10 is fluidized. The flow rate that is necessary to fluidize the filler 12 (minimum fluidization velocity $u_{mf}$) can be calculated with use of, for example, a formula (1) below. In the formula (1), $Re_{mf}$ [-] represents a particle Reynolds number, $d_p$ [m] represents a particle diameter, $\rho_f$ [kg/m$^3$] represents a gas density, and $\mu$ [Pa·s] represents a gas viscosity. Supply of the gas G1 by the gas supply device 20 can be continuously carried out during operation of the hydrogen production device 1.

$$\mathrm{Re}_{mf} = \frac{d_p \rho_f u_{mf}}{\mu} \qquad \cdots \ (1)$$

(Microwave irradiation step S3)

A microwave irradiation step S3 is a step of irradiating, with the microwave, the catalyst 121 that is in a fluidized state by the supply of the gas G1 in the gas supply step S2. In the microwave irradiation step S3, the microwave irradiation device 30 irradiates the catalyst 121 with the microwave in a multimode or a single mode, and activates the catalyst 121 by heating. This causes proceeding of pyrolysis of the hydrocarbon compound contained in the gas G1 that is in contact with the catalyst 121 which has been activated.

The output and the frequency of the microwave emitted from the microwave irradiation device 30 are not limited to any particular ones, and can be set as appropriate by a person skilled in the art, provided that the catalyst 121 can be activated and the hydrocarbon compound can be pyrolyzed. Furthermore, the output and the frequency of the microwave may be controlled so that the surface temperature of the catalyst 121 which surface temperature is measured by the reflection thermometer is maintained at a reaction temperature suitable for a pyrolysis reaction.

Upon irradiation with the microwave, the catalyst 121 is heated to, for example, 500°C to 600°C. This surface temperature can be measured by, for example, the reflection thermometer (not illustrated) included in the reactor 10. When the filler 12 in the reactor 10 contains the susceptor component, the susceptor component absorbs the microwave emitted by the microwave irradiation device 30, and releases heat to surroundings by generating heat by itself. This makes it possible to improve efficiency of heating the catalyst 121 by the microwave.

(Residence time control step S4)

A residence time control step S4 is a step of adjusting a time for which the gas G1 resides in the reactor 10, in order to control the particle diameter of the carbon aggregate obtained as the solid carbon.

In the residence time control step S4, such a residence time in the reactor 10 is adjusted by, for example, adjusting the height of a fluidized bed. For example, by increasing the height of the fluidized bed, it is possible to make the residence time long. Alternatively, the residence time may be adjusted by changing a velocity at which the catalyst is introduced from the catalyst introduction part 103.

In the microwave irradiation step S3, the hydrocarbon compound is decomposed into hydrogen and carbon on a heated surface of the catalyst. A carbon atom is deposited as carbon on the surface of the catalyst, and forms, for example, a carbon nano-onion (CNO). The CNO is a carbon nanoparticle structured such that a plurality of graphene sheets are closed in the form of a concentric spherical shell. For example, when Ni is used as the catalyst 121, a nickel-embedded carbon nano-onion (Ni-CNO) can be formed. The reactor 10 is a fluidized-bed reactor. Therefore, the generated CNO can form an aggregate while residing in the reactor 10.

It is considered possible to understand aggregation of the CNO in the reactor 10 by a mechanism similar to that of a fluidized-bed granulation process. That is, in a general fluidized-bed granulation process, a material having an adhesion force is distributed on a particle surface, and particle growth occurs with the material as a binder. In the reaction in the reactor 10, the carbon atom itself that is deposited on the surface of the catalyst is considered to function as a binder. Therefore, as the residence time in the reactor become longer, the particle diameter of the aggregate becomes greater. Therefore, it is considered possible to control the particle diameter of the CNO aggregate by controlling the residence time.

The nickel-embedded carbon nano-onion (Ni-CNO), which is an example of the carbon aggregate obtained in the present embodiment, is a material that is expected to be applied to various uses in electrodes. In a technique relating to electrodes, it is important to improve a filling factor at a time of filling with solid particles of a Ni compound, in order to improve the performance of an electrode. In order to improve the filling factor, for example, it is known that mixing, at a suitable proportion, particles that differ from each other in particle diameter in order units is theoretically effective.

It is possible to easily obtain fine Ni-CNO particles of nanometer order by a conventional technique. In the present invention, it is possible to obtain the CNO aggregate that has grown to micrometer order, by causing the CNO to grow as the CNO aggregate in the reactor 10. Such a CNO aggregate is expected to be used as an electrode material, and is considered industrially useful.

The average particle diameter of the carbon aggregate obtained in the present embodiment can be not less than 1 $\mu$m. The average particle diameter of the carbon aggregate can be calculated, for example, as follows: preprocessing by binarization is carried out with respect to an electron microscope image captured by an electron microscope, particle diameters are measured, and an average value of the particle diameters of the carbon aggregate is calculated.

(Separation step S5)

A separation step S5 is a step of separating, into a solid and gas, the solid-gas mixture discharged from the reactor 10. The mixture that contains $H_2$ which has been generated by the reaction in the reactor 10, the hydrocarbon compound which is unreacted, and the carbon aggregate which has been obtained as a result of proceeding of aggregation and whose bulk density has been decreased is discharged from the discharge part 102 provided to the upper part of the reactor 10. The discharged mixture is introduced into the cyclone 40, and is separated into the solid component and the gas component. Note that the carbon aggregate discharged from the reactor 10 may contain the catalyst 121 and/or the susceptor component.

In the present embodiment, the cyclone 40 is used as a device for carrying out solid-gas separation. However, a separation device (or separation member) used in the separation step S5 only needs to be capable of separating the solid and the gas. For example, the solid and the gas may be separated with use of another publicly known separation means such as a bag filter, a ceramic filter, or a sieve.

At least a part of the gas component that has been separated by the cyclone 40 and that contains $H_2$ and the hydrocarbon compound can pass through the heat exchangers 22A and 22B, and can be separated, by the PSA purifier 50, into $H_2$ and a gas component that contains the hydrocarbon compound which is unreacted. $H_2$ separated by the PSA purifier 50 can be discharged via the path L11 illustrated in Fig. 1, and can be recovered or used on the outside of the system. The gas component that has been separated by the PSA purifier 50 and that contains the hydrocarbon compound which is unreacted may be preheated by the heat exchanger 22B, and may be re-supplied to the reactor 10 as a part of the gas G1 that is the raw material. The paths for re-supplying the gas component to the reactor 10 are indicated by the path L13 - the heat exchanger 22B - the path L8 in Fig. 1.

At least a part of the gas component that has been separated by the cyclone 40 and that contains $H_2$ and the hydrocarbon compound may be used as an $H_2$ source for use in the hydrodesulfurization step S1. The paths for using the generated $H_2$ in the hydrodesulfurization step S1 are indicated by the path L7 - the heat exchanger 22B - the heat exchanger 22A - the path L2 in Fig. 1. This makes it possible to effectively use the generated $H_2$ in the system.

At least a part of the gas component that has been separated by the cyclone 40 and that contains $H_2$ and the hydrocarbon compound contains the hydrocarbon compound which is unreacted. Therefore, the at least a part of the gas component may be re-supplied to the reactor 10 as a part of the gas G1 that is the raw material. The paths for re-supplying the at least a part of the gas component to the reactor 10 are indicated by the path L7 - the heat exchanger 22B - the path L8 in Fig. 1. This makes it possible to improve the conversion rate of the hydrocarbon compound.

The solid component that has been separated by the cyclone 40 is recovered via the path L14, and supplied to the cooling device 60. The solid component supplied to the cooling device 60 can be cooled. The solid carbon containing the catalyst 121 and/or the susceptor component can be recovered via the path L15. A process gas (for example, unreacted methane, hydrogen which could not be separated by the PSA, inert nitrogen accompanying the catalyst, and the like) accompanying the solid carbon can be discharged to the outside of the system via the path 16.

(Summary of embodiment)

(1) A hydrogen production device in accordance with a first aspect of the present invention is a hydrogen production device including: a reactor that includes a filler containing a catalyst for pyrolysis of a hydrocarbon; a gas supply section that supplies, into the reactor, gas containing a hydrocarbon compound; and a microwave irradiation section that irradiates the catalyst with a microwave, the gas supply section supplying the gas at a flow rate at which the filler is fluidized, hydrogen being generated by the hydrocarbon compound being pyrolyzed in the presence of the catalyst activated by the microwave.

(2) The hydrogen production device in accordance with a second aspect of the present invention is arranged such that, in the first aspect, the gas is supplied from a lower part of the reactor.

(3) The hydrogen production device in accordance with a third aspect of the present invention is arranged so as to, in the first or second aspect, further include a separation section that is provided to an upper part of the reactor or downstream of the reactor and that separates a solid which contains the catalyst and gas which contains the hydrogen and/or the hydrocarbon compound.

(4) The hydrogen production device in accordance with a fourth aspect of the present invention is arranged such that, in any one of the first through third aspects, the catalyst contains HZSM-5 zeolite.

(5) The hydrogen production device in accordance with a fifth aspect of the present invention is arranged such that, in any one of the first through fourth aspects, the hydrocarbon compound is methane.

(6) The hydrogen production device in accordance with a sixth aspect of the present invention is arranged such that, in any one of the first through fifth aspects, a carbon aggregate is generated when the hydrogen is generated by the hydrocarbon compound being pyrolyzed in the presence of the catalyst activated by the microwave.

(7) The hydrogen production device in accordance with a seventh aspect of the present invention is arranged such that, in the sixth aspect, the carbon aggregate is a carbon nano-onion aggregate.

(8) The hydrogen production device in accordance with an eighth aspect of the present invention is arranged such that, in the sixth or seventh aspect, the carbon aggregate has an average particle diameter of not less than 1 $\mu$m.

(9) A hydrogen production method in accordance with a ninth aspect of the present invention includes producing hydrogen with use of a hydrogen production device described in any one of the first through eighth aspects.

(10) A carbon aggregate production device in accordance with a tenth aspect of the present invention includes: a reactor that includes a filler containing a catalyst for pyrolysis of a hydrocarbon; a gas supply section that supplies, to the reactor, gas containing a hydrocarbon compound; and a microwave irradiation section that irradiates the catalyst with a microwave, the gas supply section supplying the gas at a flow rate at which the filler is fluidized, a carbon aggregate being generated by the hydrocarbon compound being pyrolyzed in the presence of the catalyst activated by the microwave.

(11) A carbon aggregate production method in accordance with an eleventh aspect of the present invention includes producing a carbon aggregate with use of a carbon aggregate production device described in the tenth aspect.

(12) The carbon aggregate production method in accordance with a twelfth aspect of the present invention is arranged so as to further include, in the eleventh aspect, a residence time control step of, in order to control a particle diameter of the carbon aggregate, controlling a residence time for which the gas resides in the reactor.

The present invention is not limited to the embodiments, but can be altered by a skilled person in the art within the scope of the claims. The present invention also encompasses, in its technical scope, any embodiment derived by combining technical means disclosed in differing embodiments.

[Demonstration test]

Described below is a laboratory scale test for demonstrating the effect of the hydrogen production method in which the hydrogen production device 1 of the above embodiment is used.

(Hydrogen production device 1A)

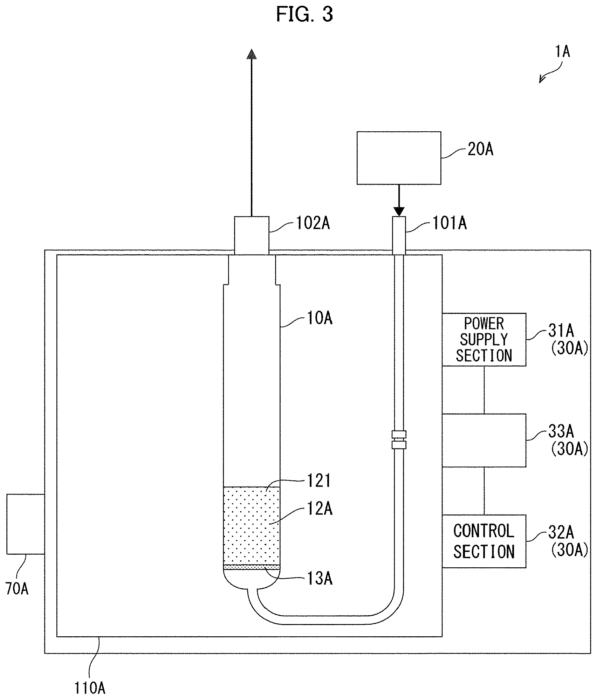

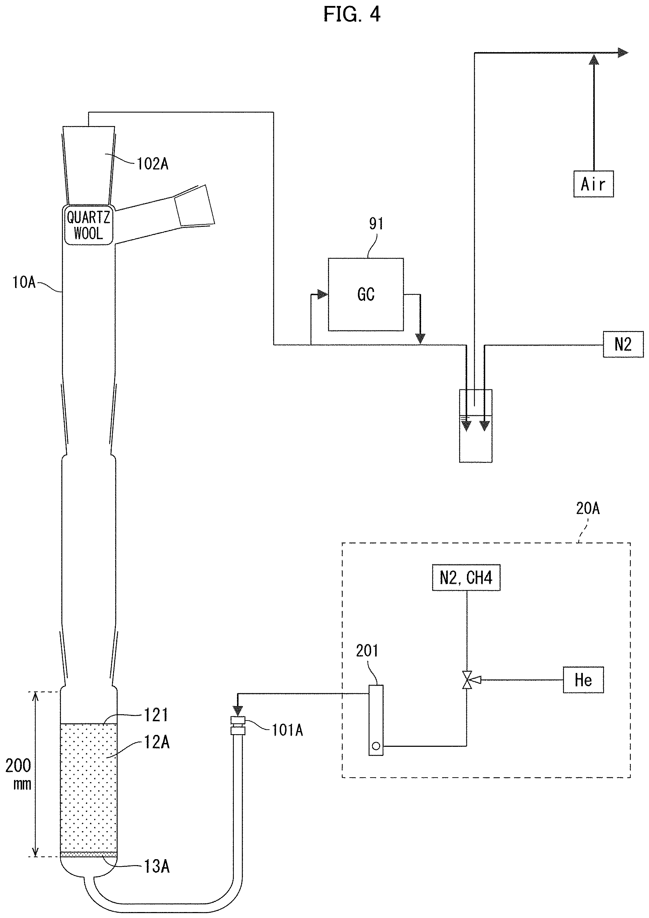

Fig. 3 is a drawing schematically illustrating a main part of a hydrogen production device 1A used in a test in an example of the present invention. Fig. 4 is an enlarged view illustrating a reactor 10A of the hydrogen production device 1A and is a drawing schematically illustrating also peripheral equipment used in the test. As illustrated in Fig. 3, the hydrogen production device 1A includes the reactor 10A, a gas supply device 20A (gas supply section), a microwave irradiation device 30A (microwave irradiation section), and a reflection thermometer 70A.

The reactor 10A is housed in a housing 110A. A gas introduction part 101A that is for supplying raw material gas to the reactor 10A from a path on the outside of the housing 110A is provided to the housing 110A. The raw material gas supplied from the gas supply device 20A is supplied into the reactor 10A from a lower part of the reactor 10A via the gas introduction part 101A. That is, the reactor 10A is a fluidized-bed reactor. Further, a discharge part 102A that is for discharging gas after a reaction from the reactor 10A to a path on the outside of the housing 110A is provided to the housing 110A.

As illustrated in Fig. 4, the reactor 10A is configured such that two glass tubes for extension are connected, by ground joints, to a quartz glass tube which is for housing the filler 12A and which has an outer diameter of 30 mm (inner diameter of 26 mm) and a height of 200 mm. A quartz glass filter having a pore diameter of 40 pm to 100 um is disposed in the lower part of the reactor 10A, and a space on the filter is filled with the filler 12A. An upper part of the reactor 10A is filled with quartz wool. Merely gas that is generated by a reaction in the reactor 10A and/or an unreacted gas component is/are discharged from the discharge part 102A.

The microwave irradiation device 30A includes a microwave irradiation member 33A, a power supply section 31A, and a control section 32A. The output and the frequency of a microwave emitted from the microwave irradiation member 33A can be controlled by the control section 32A. The microwave irradiation member 33A is constituted by a magnetron. However, the microwave irradiation member 33A is not limited to the magnetron, provided that the microwave irradiation member 33A can be excited by a microwave exciting current supplied from the power supply section 31A and can emit the microwave.

(Hydrogen production device 1B)

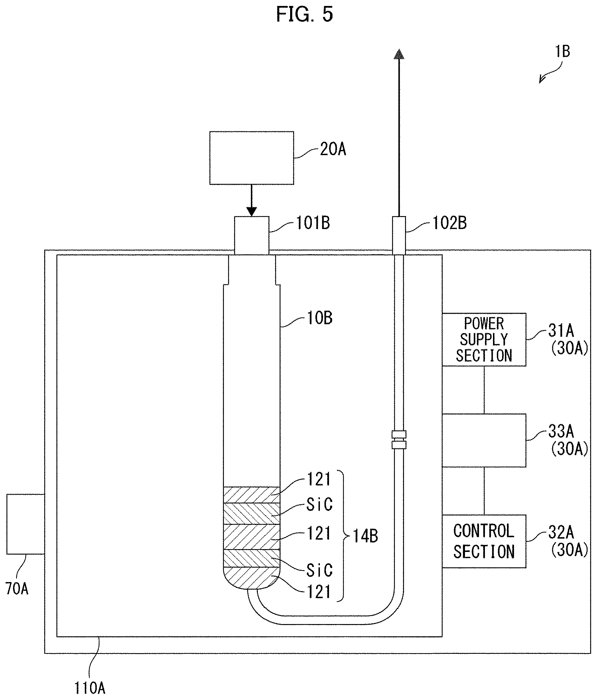

Fig. 5 is a drawing schematically illustrating a main part of a hydrogen production device 1B used in a test in a comparative example. The reactor 10A of the hydrogen production device 1A is configured as a fluidized-bed reactor. A reactor 10B of the hydrogen production device 1B is a fixed-bed reactor. Raw material gas supplied from a gas supply device 20A is supplied into the reactor 10B from an upper part of the reactor 10B via a gas introduction part 101B. Gas that has passed through a fixed bed is discharged from a lower part of the reactor 10B, and is discharged to a path on the outside of a housing 110B via a discharge part 102B.

The outer shape of the reactor 10B is similar to that of the reactor 10A. As illustrated in Fig. 5, in the reactor 10B, a catalyst 121 (height: 1 cm), SiC (as a susceptor component) (height: 1.25 cm), the catalyst 121 (height: 1.5 cm), SiC (height: 1.25 cm), and the catalyst 121 (height: 1 cm) are disposed from the lower part of the reactor 10B, and thereby the fixed bed is formed. Quartz wool is disposed as partitions between these layers. A filler which is made up of the catalyst 121 and SiC and with which the reactor 10B is filled is referred to as "filler 14B". The hydrogen production device 1B is similar to the hydrogen production device 1A, except for the above-described points.

Table 1 shows test conditions and results in the example and the comparative example.

[Table 1]

| | Raw material gas | Flow rate | Catalyst | | | Susceptor (SiC) | | Weight of filler | Form of carbon | Particle diameter | Yield of hydrogen | U/Umf |
| | | | HZSM-5 | Ni | Mo2C | (Mixed) | (Disposed) | | | | | |
| | | [ccm] | [%] | [%] | [%] | [%] | [%] | [g] | | [μm] | [%/sec] | |
| Example | CH$_4$ | 600 | 47 | 20 | 1 | 29 | 3 | 19.6 | Ni-CNO aggregate | 50 | ≥1.0 | 3.96 |
| Comparative Example | | 50 | 48 | 20 | 2 | | 30 | 17.7 | Ni-CNO | 0.2 | ≥1.0 | - |

Note that a multimode microwave reaction device (Shikoku Instrumentation Co., Ltd., μ Reactor Ex) was used as a reaction device that includes the microwave irradiation device 30A, the reflection thermometer 70A, and the housing 110A. The oscillation frequency of the device is 2.45 GHz.

(Example)

First, HZSM-5 zeolite (HZSM-5), molybdenum carbide (Mo2C), and a nickel powder (Ni) were physically mixed to obtain a catalyst 121. A weight ratio between the mixed components was Mo2C:Ni:HZSM-5 = 1:20:47 with the total weight (19.6 g) of a filler 12A containing the catalyst 121 and a susceptor being taken as 100. Subsequently, as the susceptor component, SiC was added at a ratio of 29% with the total weight of the filler 12A being taken as 100, and SiC and the catalyst 121 were physically mixed to obtain a first filler.

The reactor 10A was filled with, as a second filler, SiC at a ratio of 3% with the total weight of the filler 12A being taken as 100. On the second filler, the first filler was disposed. The first filler and the second filler are collectively referred to as "filler 12A". The reactor 10A filled with the filler 12A was disposed in the above reaction device. $CH_4$ was introduced at 600 ml/min from the gas supply device 20A via the gas introduction part 101A, and the catalyst 121 in the reactor 10A was irradiated with the microwave in a multimode so that a reaction proceeded. A flow rate of $CH_4$ can be measured by a flowmeter 201 (see Fig. 4). A surface temperature of the catalyst 121 was regarded as a reaction temperature. The reaction temperature was measured with use of the reflection thermometer 70A. The output of the microwave was controlled (400 W to 1000 W) so that the reaction temperature became 600°C. The amounts of components of a reaction product (gas) discharged from the discharge part 102A were quantified online by a gas chromatograph 91 connected as illustrated in Fig. 4. The yield of hydrogen was calculated based on a result of the quantification, and found to be not less than 1%/sec. Note that the yield of the hydrogen was calculated as a reaction velocity r per unit time. The reaction velocity r can be calculated by dividing a reaction rate by a reaction time. U/Umf is a value obtained by dividing the flow rate of $CH_4$ by the above-described minimum fluidization velocity, and is an index of stable fluidization. In the present example, U/Umf is 3.96. It is therefore found that a stable fluidized bed is formed.

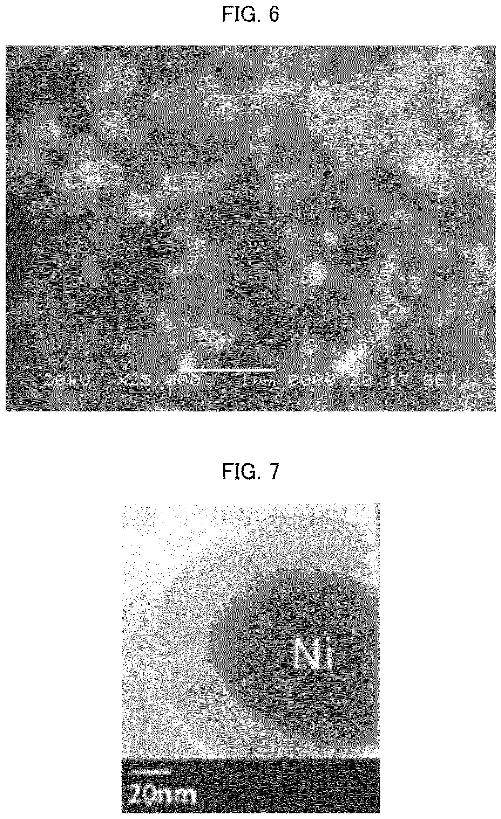

Fig. 6 is an image of carbon aggregates obtained in the example, the image being captured by a scanning electron microscope (SEM). In the example, aggregated Ni-CNO having a particle diameter of approximately 50 $\mu$m was obtained as solid carbon.

(Comparative example)

First, HZSM-5 zeolite (HZSM-5), molybdenum carbide (Mo2C), and a nickel powder (Ni) were physically mixed to obtain a catalyst 121. SiC and the mixed catalyst 121 were disposed as described in the section (Hydrogen production device 1B), and thereby the fixed bed constituted by the filler 14B was obtained. A weight ratio between the components was Mo2C:Ni:HZSM-5:SiC = 2:20:48:30 with the total weight (17.7 g) of the filler 14B containing the catalyst 121 and the susceptor being taken as 100.

The reactor 10B filled with the filler 14B was disposed in the above reaction device. $CH_4$ was introduced at 50 ml/min from the gas supply device 20A via the gas introduction part 101B, and the catalyst 121 in the reactor 10B was irradiated with the microwave in a multimode so that a reaction proceeded. A surface temperature of the catalyst 121 was measured with use of the reflection thermometer 70A, and the output of the microwave was controlled (400 W to 1000 W) so that a reaction temperature became 600°C. The amounts of components of a reaction product discharged from the discharge part 102B were quantified online by a gas chromatograph. The yield of hydrogen was calculated, and found to be not less than 1%/sec.

Fig. 7 is an image of carbon obtained in the comparative example, the image being captured by an SEM. In the comparative example, Ni-CNO having a particle diameter of approximately 200 nm was obtained as solid carbon.

By the above demonstration test, it was demonstrated that the hydrogen production method in accordance with an embodiment of the present invention makes it possible to obtain a carbon aggregate which is industrially useful and which has a large particle diameter, while maintaining the yield of hydrogen.

Reference Signs List

1, 1A, 1B Hydrogen production device
10, 10A, 10B Reactor
12, 12A, 14B Filler
20, 20A, 20B Gas supply device (gas supply section)
30, 30A Microwave irradiation device (microwave irradiation section)
40 Cyclone (separation section)
121 Catalyst

**Claims**

1. A hydrogen production device comprising:

   a reactor that includes a filler containing a catalyst for pyrolysis of a hydrocarbon;
   a gas supply section that supplies, into the reactor, gas containing a hydrocarbon compound; and
   a microwave irradiation section that irradiates the catalyst with a microwave,
   the gas supply section supplying the gas at a flow rate at which the filler is fluidized,
   hydrogen being generated by the hydrocarbon compound being pyrolyzed in the presence of the catalyst activated by the microwave.

2. The hydrogen production device as set forth in claim 1, wherein the gas is supplied from a lower part of the reactor.

3. The hydrogen production device as set forth in claim 1, further comprising
   a separation section that is provided to an upper part of the reactor or downstream of the reactor and that separates a solid which contains the catalyst and gas which contains the hydrogen and/or the hydrocarbon compound.

4. The hydrogen production device as set forth in claim 1, wherein the catalyst contains HZSM-5 zeolite.

5. The hydrogen production device as set forth in claim 1, wherein the hydrocarbon compound is methane.

6. The hydrogen production device as set forth in claim 1, wherein a carbon aggregate is generated when the hydrogen is generated by the hydrocarbon compound being pyrolyzed in the presence of the catalyst activated by the microwave.

7. The hydrogen production device as set forth in claim 6, wherein the carbon aggregate is a carbon nano-onion aggregate.

8. The hydrogen production device as set forth in claim 6, wherein the carbon aggregate has an average particle diameter of not less than 1 $\mu$m.

9. A hydrogen production method comprising
   producing hydrogen with use of a hydrogen production device recited in any one of claims 1 through 8.

10. A carbon aggregate production device comprising:

    a reactor that includes a filler containing a catalyst for pyrolysis of a hydrocarbon;
    a gas supply section that supplies, to the reactor, gas containing a hydrocarbon compound; and
    a microwave irradiation section that irradiates the catalyst with a microwave,
    the gas supply section supplying the gas at a flow rate at which the filler is fluidized,
    a carbon aggregate being generated by the hydrocarbon compound being pyrolyzed in the presence of the catalyst activated by the microwave.

11. A carbon aggregate production method comprising
    producing a carbon aggregate with use of a carbon aggregate production device recited in claim 10.

12. The carbon aggregate production method as set forth in claim 11, further comprising
    a residence time control step of, in order to control a particle diameter of the carbon aggregate, controlling a time for which the gas resides in the reactor.

FIG. 1

EP 4 365 129 A1

FIG. 2

```
                    ┌─────────────┐
                    │    START    │
                    └──────┬──────┘
                           │
          ┌────────────────────────────────┐
          │  HYDRODESULFURIZATION STEP      │ ⌒ S1
          └────────────────┬───────────────┘
                           │
          ┌────────────────────────────────┐
          │        GAS SUPPLY STEP          │ ⌒ S2
          └────────────────┬───────────────┘
                           │
          ┌────────────────────────────────┐
          │   MICROWAVE IRRADIATION STEP    │ ⌒ S3
          └────────────────┬───────────────┘
                           │
          ┌────────────────────────────────┐
          │   RESIDENCE TIME CONTROL STEP   │ ⌒ S4
          └────────────────┬───────────────┘
                           │
          ┌────────────────────────────────┐
          │        SEPARATION STEP          │ ⌒ S5
          └────────────────┬───────────────┘
                           │
                    ┌──────────────┐
                    │     END      │
                    └──────────────┘
```

FIG. 3

# FIG. 4

FIG. 5

FIG. 6

FIG. 7

## INTERNATIONAL SEARCH REPORT

International application No.

**PCT/JP2022/024048**

| A. | CLASSIFICATION OF SUBJECT MATTER |
|---|---|

*C01B 3/30*(2006.01)i; *C01B 32/18*(2017.01)i; *B01J 29/48*(2006.01)i
FI: C01B3/30; C01B32/18; B01J29/48 M

According to International Patent Classification (IPC) or to both national classification and IPC

| B. | FIELDS SEARCHED |
|---|---|

Minimum documentation searched (classification system followed by classification symbols)

C01B3/30; C01B32/18; B01J29/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JSTChina/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2015-20929 A (INST NAT COLLEGES TECH JAPAN) 02 February 2015 (2015-02-02) claims | 1-6, 8-11 |
| A | | 7, 12 |
| Y | JP 2015-221733 A (INST NAT COLLEGES TECH JAPAN) 10 December 2015 (2015-12-10) claims | 1-6, 8-11 |
| Y | CN 1944238 A (BAO, Tao) 11 April 2007 (2007-04-11) claims, p. 4, lines 8-12 | 1-6, 8-11 |
| Y | JP 2012-236727 A (JAPAN STEEL WORKS LTD) 06 December 2012 (2012-12-06) claims, paragraphs [0058], [0072], fig. 1 | 1-6, 8-11 |
| Y | JP 2016-522083 A (HINDUSTAN PETROLEUM CORPORATION LTD.) 28 July 2016 (2016-07-28) paragraph [0040] | 1-6, 8-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2022** | **30 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT

Information on patent family members

International application No.

**PCT/JP2022/024048**

| Patent document cited in search report | | | Publication date (day/month/year) | Patent family member(s) | | | Publication date (day/month/year) |
|---|---|---|---|---|---|---|---|
| JP | 2015-20929 | A | 02 February 2015 | (Family: none) | | | |
| JP | 2015-221733 | A | 10 December 2015 | (Family: none) | | | |
| CN | 1944238 | A | 11 April 2007 | (Family: none) | | | |
| JP | 2012-236727 | A | 06 December 2012 | US claims, paragraphs [0058], [0072], fig. 1 | 2014/0086820 | A1 | |
| | | | | WO | 2012/153810 | A1 | |
| | | | | EP | 2708507 | A1 | |
| | | | | CA | 2834996 | A1 | |
| | | | | CN | 103534203 | A | |
| JP | 2016-522083 | A | 28 July 2016 | US paragraph [0049] | 2016/0129424 | A1 | |
| | | | | WO | 2014/188439 | A1 | |
| | | | | CA | 2913277 | A1 | |

Form PCT/ISA/210 (patent family annex) (January 2015)

**EP 4 365 129 A1**

**Patent documents cited in the description**

- JP 2015020929 A
- JP 2015044702 A
- JP 2015221733 A